# EUROPÄISCHE PATENTSCHRIFT

(11) **EP 4 308 351 B1**
(45) Veröffentlichungstag und Bekanntmachung des Hinweises auf die Patenterteilung: **19.02.2025**
(21) Anmeldenummer: 22714846.7
(22) Anmeldetag: 15.03.2022
(51) Int. Cl.: B27D 5/00, B27G 13/00

(54) **MEHRPROFILFRÄSVORRICHTUNG UND BEARBEITUNGSEINRICHTUNG**
MULTI-PROFILE MILLING APPARATUS AND MACHINING DEVICE
APPAREIL DE FRAISAGE MULTI-PROFIL ET DISPOSITIF D'USINAGE

(30) Priorität: 17.03.2021 DE 102021106485
(43) Veröffentlichungstag der Anmeldung: 24.01.2024
(73) Patentinhaber: HOMAG Kantentechnik GmbH, 32657 Lemgo (DE); Leitz GmbH & Co. KG, 73447 Oberkochen (DE)
(72) Erfinder: KLÖPPER, Holger, 32107 Bad Salzuflen (DE); EHRENSPERGER, Heiko, 73457 Essingen (DE); GRAEF, Jürgen, 73447 Oberkochen (DE); KISSELBACH, Andreas, 73431 Aalen (DE)
(74) Vertreter: Hoffmann Eitle
(86) Internationale Anmeldenummer: PCT/EP2022/056647
(87) Internationale Veröffentlichungsnummer: WO 2022/194839

(56) Entgegenhaltungen:
- EP-A1- 3 909 710
- WO-A1-2018/137983
- DE-A1- 19 915 672
- DE-B- 1 291 171
- US-A- 4 610 285

## Beschreibung

### Technisches Gebiet

Die Erfindung betrifft eine Mehrprofilfräsvorrichtung zur spanenden Bearbeitung von Werkstücken sowie eine Bearbeitungseinrichtung.

### Stand der Technik

Die DE 19 915 672 A1, welche die Grundlage für die zweiteilige Fassung des unabhängigen Anspruches 1 bildet, offenbart eine Mehrprofilfräsvorrichtung zur spanenden Bearbeitung von Werkstückkanten. Diese Mehrprofilfräsvorrichtung umfasst zwei Fräseinrichtungen, die jeweils ein Fräswerkzeug mit unterschiedlichen Bearbeitungsprofilen aufweisen. Dabei ist eine erste Fräseinrichtung in einer Arbeitsposition angeordnet, um die Werkstückkante mit einem ersten Bearbeitungsprofil zu bearbeiten. Eine zweite Fräseinrichtung kann axial zur ersten Fräseinrichtung zwischen einer Ruheposition und einer Arbeitsposition bewegt werden, wodurch das Bearbeitungsprofil der zweiten Fräseinrichtung das Bearbeitungsprofil der ersten Fräseinrichtung für den Bearbeitungsvorgang überlagert. Die Stellbewegung der zweiten Fräseinrichtung erfolgt über eine Kupplungsgabel, die durch einen Pneumatikzylinder angesteuert wird. Zur Arretierung der zweiten Fräseinrichtung während des Bearbeitungsvorgangs wird diese insbesondere in der Arbeitsposition mittels einer hydraulischen Spanneinrichtung spielfrei positioniert. Eine solche hydraulische Spanneinrichtung weist einen komplexen Aufbau auf und erhöht die Kosten dieser Mehrprofilfräsvorrichtung.

Ein weiteres Beispiel bisher bekannter Mehrprofilfräsvorrichtungen kann der DE 12 91 171 B entnommen werden.

### Darstellung der Erfindung

Der Erfindung liegt die Aufgabe zugrunde, eine Mehrprofilfräsvorrichtung vorzuschlagen, die einen vereinfachten konstruktiven Aufbau aufweist und eine flexible Integration in einer Bearbeitungseinrichtung ermöglicht. Zudem liegt der Erfindung die Aufgabe zugrunde, eine Bearbeitungseinrichtung vorzuschlagen, die bei einer Mehrprofilfräsbearbeitung eine hohe Betriebszuverlässigkeit aufweist.

Eine Mehrprofilfräsvorrichtung ist in Anspruch 1 definiert. Eine Bearbeitungseinrichtung ist in Anspruch 13 definiert. Unteransprüche beziehen sich auf bestimmte Ausführungsformen.

Die Aufgabe wird durch eine Mehrprofilfräsvorrichtung zur spanenden Bearbeitung von Werkstücken, die bevorzugt aus Holz, Holzwerkstoffen, Kunststoff, Verbundwerkstoff und/oder dergleichen ausgebildet sind, insbesondere zur Bearbeitung von Kanten der Werkstücke, mit einer ersten Fräseinrichtung, die in einer Arbeitsposition vorgesehen und mit einer Antriebswelle koppelbar ist, und mit zumindest einer zweiten Fräseinrichtung, die relativ zur ersten Fräseinrichtung zwischen einer Gebrauchsposition und einer Nichtgebrauchsposition bewegbar ist, gelöst, wobei eine Arretierungseinrichtung mit wenigstens einem Fliehkraftelement vorgesehen ist und das wenigstens eine Fliehkraftelement die zumindest eine zweite Fräseinrichtung während einer Drehbewegung der Fräseinrichtungen in der Gebrauchsposition oder der Nichtgebrauchsposition arretiert.

Mit einer solchen Mehrprofilfräsvorrichtung können Werkstücke, insbesondere Kanten von Werkstücken, mit unterschiedlichen Bearbeitungsprofilen, beispielsweise unterschiedlichen Radien oder Fasen, bearbeitet werden. Dies ist dadurch erreicht, dass die zweite Fräseinrichtung axial zur zweiten Fräseinrichtung bewegbar ist, wodurch für den Bearbeitungsvorgang eine Überlagerung der unterschiedlichen Bearbeitungsprofile vorgesehen ist. Dabei ist durch das wenigstens eine Fliehkraftelement der Arretierungseinrichtung eine Fixierung der zweiten Fräseinrichtung gebildet, indem das Fliehkraftelement aufgrund einer während der Drehbewegung erzeugten Fliehkraft die zweite Fräseinrichtung in der Gebrauchsposition oder der Nichtgebrauchsposition arretiert. Die Mehrprofilfräsvorrichtung ermöglicht zudem die Mehrprofilbearbeitung einer umlaufenden Kante am Werkstück, beispielsweise die umlaufende Kante, die eine Schmalseite eines plattenförmigen Werkstücks begrenzt.

Eine bevorzugte Ausgestaltung der Mehrprofilfräsvorrichtung kann vorsehen, dass die erste Fräseinrichtung und die zumindest eine zweite Fräseinrichtung koaxial zueinander angeordnet sind und die Arretierungseinrichtung zwischen den Fräseinrichtungen wirkend angeordnet ist.

Durch die koaxiale Anordnung der beiden Fräseinrichtungen kann eine einfache konstruktive Ausgestaltung der Mehrprofilfräsvorrichtung erreicht sein, bei welcher die zweite Fräseinrichtung axial bewegbar zur ersten Fräseinrichtung vorgesehen ist. Indem die Arretierungseinrichtung zwischen den Fräseinrichtungen wirkt, kann zudem eine kompakte Ausgestaltung erreicht sein.

In einer weiteren bevorzugten Ausgestaltung der Mehrprofilfräsvorrichtung kann vorgesehen sein, dass die zumindest eine zweite Fräseinrichtung axial verschiebbar und drehfest mit der ersten Fräseinrichtung gekoppelt ist.

Auf diese Weise kann ein auf die erste Fräseinrichtung übertragenes Drehmoment auf die zweite Fräseinrichtung übertragen werden und gleichzeitig die axiale Verschiebbarkeit der zweiten Fräseinrichtung zwischen der Gebrauchsposition und der Nichtgebrauchsposition ermöglicht sein.

Eine vorteilhafte Weiterbildung der Mehrprofilfräsvorrichtung kann zudem vorsehen, dass die Arretierungseinrichtung wenigstens zwei Fliehkraftelemente aufweist, wobei wenigstens ein erstes Fliehkraftelement die zweite Fräseinrichtung in der Gebrauchsposition arretiert und wenigstens ein zweites Fliehkraftelement die zweite Fräseinrichtung in der Nichtgebrauchsposition arretiert.

Dadurch kann zur Arretierung der zweiten Fräseinrichtung in der Gebrauchsposition oder in der Nichtgebrauchsposition jeweils wenigstens ein Fliehkraftelement vorgesehen sein, so dass die zweite Fräseinrichtung während des Bearbeitungsvorgangs sicher arretiert ist.

Vorteilhafterweise können die wenigstens zwei Fliehkraftelemente bei der Mehrprofilfräsvorrichtung in einer axialen Richtung beabstandet zueinander angeordnet sein.

Durch diese axiale Beabstandung der wenigstens zwei Fliehkraftelemente kann bei einem definierten Abstand zwischen den Fliehkraftelementen eine exakte Positionierung der zweiten Fräseinrichtung in der Gebrauchsposition sowie in der Nichtgebrauchsposition vorgesehen sein. Durch einen möglichst geringen axialen Abstand zwischen den wenigstens zwei Fliehkraftelementen kann zudem ein kurzer Stellweg zwischen der Gebrauchsposition und der Nichtgebrauchsposition gebildet sein.

Besonders bevorzugt kann bei der Mehrprofilfräsvorrichtung vorgesehen sein, dass die wenigstens zwei Fliehkraftelemente jeweils in einer Ausnehmung am Außenumfang der ersten Fräseinrichtung aufgenommen sind und an einem Innenumfang der zweiten Fräseinrichtung zumindest eine Vertiefung ausgebildet ist, die in der Gebrauchsposition der zweiten Fräseinrichtung zu dem wenigstens einen ersten Fliehkraftelement positioniert ist und in der Nichtgebrauchsposition der zweiten Fräseinrichtung zu dem wenigstens einen zweiten Fliehkraftelement.

Dies ermöglicht neben einer besonders einfachen und kompakten Ausgestaltung der Arretierungseinrichtung auch, dass die Arretierungseinrichtung unmittelbar zwischen den Fräseinrichtungen wirkend angeordnet sein kann. Zudem kann die Arretierungseinrichtung dadurch geschützt zwischen den Fräseinrichtungen vorgesehen sein, sodass eine verminderte Beeinträchtigung aufgrund von Schmutz, Staub, Sägespänen oder dergleichen erreicht sein kann.

In einer alternativen Ausgestaltung der Mehrprofilfräsvorrichtung kann zudem vorgesehen sein, dass das wenigstens eine Fliehkraftelement in einer Ausnehmung am Außenumfang der ersten Fräseinrichtung aufgenommen ist und am Innenumfang der zweiten Fräseinrichtung zumindest zwei Vertiefungen axial beabstandet zueinander ausgebildet sind, wobei in der Gebrauchsposition der zweiten Fräseinrichtung eine erste Vertiefung zu dem Fliehkraftelement positioniert ist und in der Nichtgebrauchsposition eine zweite Vertiefung zu dem Fliehkraftelement positioniert ist.

Durch diese Ausgestaltung der Arretierungseinrichtung kann eine Reduzierung der Fliehkraftelemente erreicht sein.

Vorteilhafterweise kann bei der Mehrprofilfräsvorrichtung vorgesehen sein, dass durch die Drehbewegung der Fräseinrichtungen zumindest ein Fliehkraftelement in eine Arretierungsposition überführt ist, in der das zumindest eine Fliehkraftelement teilweise in der Ausnehmung am Außenumfang der ersten Fräseinrichtung und teilweise in der zumindest einen korrespondierenden Vertiefung am Innenumfang der zweiten Fräseinrichtung angeordnet ist.

Dadurch kann erreicht sein, dass das zumindest eine Fliehkraftelement während der Drehbewegung der Fräseinrichtungen die zweite Fräseinrichtung sicher arretiert und während eines Stillstands die zumindest eine zweite Fräseinrichtung zum Überführen zwischen der Gebrauchsposition oder der Nichtgebrauchsposition freigibt.

Besonders bevorzugt kann bei der Mehrprofilfräsvorrichtung vorgesehen sein, dass das wenigstens eine Fliehkraftelement als eine Kugel oder als ein zylinderförmiger Körper, dessen radial nach außen weisende Stirnseite abgerundet oder kegelförmig ist, ausgebildet ist.

Korrespondierend zu dem kugelförmigen oder zylinderförmigen Fliehkraftelement kann die entsprechende Ausnehmung als Bohrung mit einem minimal größeren Durchmesser als das kugelförmige oder zylinderförmige Fliehkraftelement ausgebildet sein. Dadurch kann ein axiales Spiel des kugelförmigen oder zylinderförmigen Fliehkraftelements minimiert oder eliminiert sein.

Eine weitere bevorzugte Ausgestaltung der Mehrprofilfräsvorrichtung kann vorsehen, dass die zumindest eine Vertiefung am Innenumfang der zweiten Fräseinrichtung im Längsschnitt der zweiten Fräseinrichtung eine auf der Seite der Gebrauchsposition angeordnete Schrägfläche aufweist und vorzugsweise V-förmig ausgebildet ist.

Indem das Fliehkraftelement in der Arretierungsposition an Schrägflächen der V-förmigen Vertiefung anliegt und aufgrund der Fliehkraft eine radiale Kraft auf diese ausübt, kann aufgrund der V-förmigen Gestalt der Vertiefung eine automatische Zentrierung der zweiten Fräseinrichtung in der Gebrauchsposition und/oder der Nichtgebrauchsposition ausgebildet sein.

Eine besonders bevorzugte Ausgestaltung der Mehrprofilfräsvorrichtung kann vorsehen, dass das wenigstens eine erste Fliehkraftelement in der Arretierungsposition in der Weise auf die Schrägfläche der zumindest einen Vertiefung wirkt, dass eine Axialkraftkomponente gebildet ist, welche die zweite Fräseinrichtung in der Gebrauchsposition gegen wenigstens einen die Gebrauchsposition definierenden Anschlag drückt.

Durch diese Ausgestaltung kann für die Gebrauchsposition ein definierter axialer Anschlag gebildet sein, sodass die zweite Fräseinrichtung während des Bearbeitungsvorgangs spielfrei positionierbar ist. Der Anschlag kann in Verbindung mit wenigstens einem Anschlagelement zwischen der ersten und der zweiten Fräseinrichtung gebildet sein. Insbesondere ist das wenigstens eine Fliehkraftelement in der Weise bemessen, dass die durch die Fliehkraft erzeugte Axialkraftkomponente größer ist als die durch den Bearbeitungsvorgang erzeugten Axialkräfte. Zudem kann vorgesehen sein, dass das wenigstens eine zweite Fliehkraftelement in der Arretierungsposition in der Weise auf eine weitere, auf der Seite der Nichtgebrauchsposition angeordnete Schrägfläche der Vertiefung wirkt, dass eine Axialkraftkomponente die zweite Fräseinrichtung in der Nichtgebrauchsposition gegen wenigstens einen die Nichtgebrauchsposition definierenden Anschlag drückt.

In einer vorteilhaften Ausgestaltung der Mehrprofilfräsvorrichtung kann der wenigstens eine die Gebrauchsposition und/oder die Nichtgebrauchsposition definierende Anschlag zumindest eine punktförmige oder nockenförmige Anschlagfläche aufweisen.

Dadurch kann eine besonders kleine Kontaktfläche des Anschlags erreicht sein, sodass die Möglichkeit eines Genauigkeitsverlustes aufgrund von Verschmutzungen, beispielsweise anhaftende Fremdkörper, wie Staub oder Späne, minimiert werden kann. Vorzugsweise ist der Anschlag durch drei punktförmige oder nockenförmige Anschlagflächen gebildet. Auf diese Weise kann eine definierte Anschlagebene gebildet sein, die eine präzise Positionierung der zweiten Fräseinrichtung insbesondere in der Gebrauchsposition ermöglicht. Vorteilhafterweise kann der wenigstens eine Anschlag zwischen einem Außenumfang der ersten Fräseinrichtung und einem Innenumfang der zweiten Fräseinrichtung verdeckt angeordnet sein. Auf diese Weise kann der wenigstens eine Anschlag gegen Verschmutzungen geschützt sein.

Eine weitere vorteilhafte Ausgestaltung der Mehrprofilfräsvorrichtung kann vorsehen, dass der wenigstens eine, die Gebrauchsposition definierende Anschlag durch eine Justiereinrichtung axial verschiebbar vorgesehen ist.

Auf diese Weise kann eine axiale Position der Anschlagflächen zueinander veränderbar sein, beispielsweise durch einen Exzenter, wodurch eine präzise axiale Positionierung der zweiten Fräseinrichtung vorgesehen sein kann.

Eine vorteilhafte Weiterbildung der Mehrprofilfräsvorrichtung kann zudem vorsehen, dass eine Tiefe der Vertiefung in der Weise ausgebildet ist, dass das wenigstens eine kugelförmige oder zylinderförmige Fliehkraftelement in der Arretierungsposition zumindest zur Hälfte in der Ausnehmung angeordnet ist.

Dadurch kann ein minimales axiales Spiel zwischen dem wenigstens einen kugelförmigen Fliehkraftelement und der Ausnehmung ausgebildet sein, da das Fliehkraftelement in der Arretierungsposition mit dem größten Durchmesser in der Ausnehmung verbleibt. Auf diese Weise kann in der Arretierungsposition eine axiale Bewegung des Fliehkraftelements verhindert sein.

In einer weiteren Ausgestaltung der Mehrprofilfräsvorrichtung kann zudem eine Tastrolle vorgesehen sein, die drehentkoppelt an der ersten Fräseinrichtung und/oder der Antriebswelle gelagert ist.

Durch diese Tastrolle kann bei dem Bearbeitungsvorgang eine geführte Bewegung der Mehrprofilfräsvorrichtung zum Werkstück vorgesehen sein, wodurch ein gleichmäßiges und somit qualitativ hochwertiges Bearbeitungsergebnis erreicht werden kann.

Die Aufgabe wird zudem durch eine Bearbeitungseinrichtung zur spanenden Bearbeitung von Werkstücken, die bevorzugt aus Holz, Holzwerkstoffen, Kunststoff, Verbundwerkstoff und/oder dergleichen ausgebildet sind, insbesondere zur Bearbeitung von Kanten der Werkstücke, aufweisend eine Werkstückauflage zum Aufnehmen wenigstens eines Werkstücks, eine Mehrprofilfräsvorrichtung zum Ausführen des spanenden Bearbeitungsvorgangs am Werkstück, eine Antriebsvorrichtung zum Antreiben der Mehrprofilfräsvorrichtung sowie eine Fördereinrichtung zum Herbeiführen einer Relativbewegung zwischen dem Werkstück und der Mehrprofilfräsvorrichtung, gelöst, wobei die Mehrprofilfräsvorrichtung nach einem der zuvor beschriebenen Ausführungsformen ausgebildet ist.

Die Bearbeitungseinrichtung mit einer solchen Mehrprofilfräsvorrichtung ermöglicht das Bearbeiten von Werkstücken, insbesondere Kanten von Werkstücken, mit unterschiedlichen Bearbeitungsprofilen. Die Bearbeitungsprofile können beispielsweise unterschiedliche Radien oder Fasen aufweisen. Auf diese Weise können Rüstzeiten zum Wechseln von Werkzeugen für unterschiedliche Bearbeitungsprofile vermieden und somit eine zeit- und kostensparende Bearbeitung der Werkstücke erreicht werden.

Eine bevorzugte Weiterbilder der Bearbeitungseinrichtung kann vorsehen, dass eine Stelleinrichtung vorgesehen ist, die eine Stellbewegung der zumindest einen zweiten Fräseinrichtung zwischen der Gebrauchsposition oder der Nichtgebrauchsposition ansteuert.

Mit einer solchen Stelleinrichtung kann eine Automatisierung der Mehrprofilbearbeitung erreicht werden, indem die Stelleinrichtung beispielsweise durch eine Steuerung angesteuert wird, so dass die axiale Stellbewegung der zweiten Fräseinrichtung in Abhängigkeit von dem zu erzeugenden Bearbeitungsprofil ausgeführt wird.

In einer weiteren vorteilhaften Ausgestaltung der Bearbeitungseirichtung kann eine Sensoreinrichtung vorgesehen sein, welche eine Stellposition der zumindest einen zweiten Fräseinrichtung erfasst.

Eine solche Sensoreinrichtung ermöglicht die präzise Erfassung der Stellposition der zweiten Fräseinrichtung, so dass anhand des Erfassungssignals eine Steuerung des Bearbeitungsvorgangs ermöglicht sein kann.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine Seitenansicht einer Ausführungsform einer offenbarungsgemäßen Mehrprofilfräsvorrichtung;
- Fig. 2: eine perspektivische Teilexplosionsansicht der Mehrprofilfräsvorrichtung in Figur 1 mit einer demontierten Tastrolle;
- Fig. 3: eine schematische Schnittansicht der Mehrprofilfräsvorrichtung mit einer zweiten Fräseinrichtung in einer Gebrauchsposition;
- Fig. 4: eine Detailansicht einer Fliehkrafteinrichtung der Mehrprofilfräsvorrichtung gemäß Detail A in Figur 3;
- Fig. 5: eine schematische Schnittansicht der Mehrprofilfräsvorrichtung mit der zweiten Fräseinrichtung in einer Nichtgebrauchsposition;
- Fig. 6: eine Detailansicht der Fliehkrafteinrichtung der Mehrprofilfräsvorrichtung gemäß Detail B in Figur 5;
- Fig. 7: eine schematische Schnittansicht einer alternativen Ausführungsform der Mehrprofilfräsvorrichtung mit der zweiten Fräseinrichtung in der Gebrauchsposition;
- Fig. 8: eine Detailansicht der Fliehkrafteinrichtung der alternativen Ausführungsform der Mehrprofilfräsvorrichtung gemäß Detail C in Figur 7;
- Fig. 9: eine schematische Schnittansicht der alternativen Ausführungsform der Mehrprofilfräsvorrichtung mit der zweiten Fräseinrichtung in der Nichtgebrauchsposition;
- Fig. 10: eine Detailansicht der Fliehkrafteinrichtung der alternativen Ausführungsform der Mehrprofilfräsvorrichtung gemäß Detail D in Figur 9.

### Beschreibung von Ausführungsformen

Gleiche Bezugszeichen, die in verschiedenen Figuren aufgeführt sind, benennen identische, einander entsprechende, oder funktionell ähnliche Elemente.

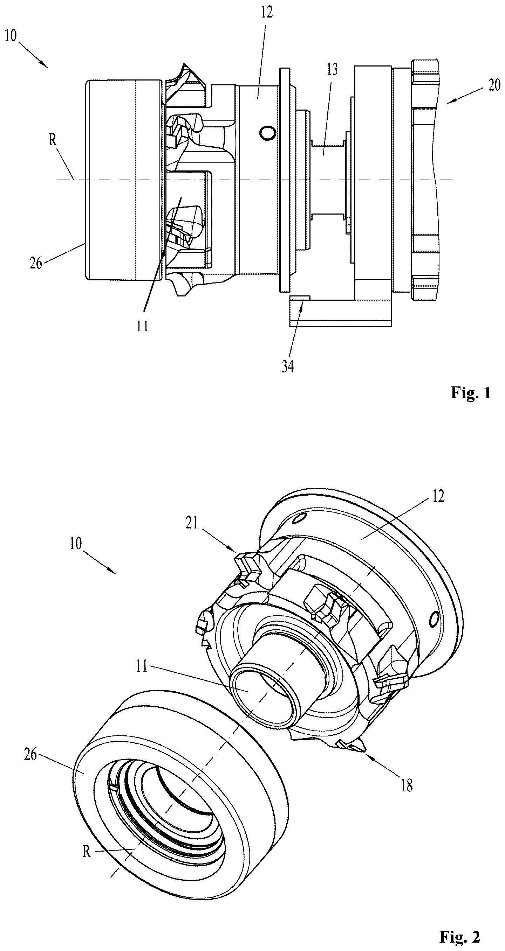

Figur 1 zeigt eine Seitenansicht einer Ausführungsform einer offenbarungsgemäßen Mehrprofilfräsvorrichtung 10 und Figur 2 eine perspektivische Teilexplosionsansicht der Mehrprofilfräsvorrichtung 10 mit einer demontierten Tastrolle 26. Eine solche Mehrprofilfräsvorrichtung 10 ist zur spanenden Bearbeitung von Werkstücken mit unterschiedlichen Bearbeitungsprofilen bzw. Fräsprofilen vorgesehen. Insbesondere ist die Mehrprofilfräsvorrichtung 10 zur Bearbeitung von Kanten der Werkstücke vorgesehen. Hierfür ist die Mehrprofilfräsvorrichtung 10 über eine entsprechende Schnittstelle mit einer in Figur 1 angedeuteten Bearbeitungseinrichtung 20 koppelbar.

Die Bearbeitungseinrichtung 20 kann eine beliebige Werkzeugmaschine zum Bearbeiten von Werkstücken sein. Insbesondere ist die Bearbeitungseinrichtung 20 als eine Holzbearbeitungseinrichtung ausgebildet. Die Bearbeitungseinrichtung 20 kann als eine Durchlaufmaschine oder als eine stationäre Werkzeugmaschine ausgebildet sein. Bei einer Durchlaufmaschine erfolgt das Bearbeiten der Werkstücke im Durchlaufverfahren, wobei die Werkstücke durch eine Transporteinrichtung relativ zur Mehrprofilfräsvorrichtung 10 bewegt werden. Zudem kann die Mehrprofilfräsvorrichtung 10 durch eine Stelleinrichtung in einer X-, Y- und/oder Z-Richtung relativ zum Werkstück bewegbar angeordnet sein. Bei einer stationären Werkzeugmaschine kann das Werkstück stationär aufgenommen sein und die Mehrprofilfräsvorrichtung 10 durch eine Stelleinrichtung relativ zum Werkstück bewegbar sein. Die Bearbeitungseinrichtung kann auch als eine CNC-gesteuerte Bearbeitungseinrichtung oder ein CNC-gesteuertes Bearbeitungszentrum ausgebildet sein.

Bei den zu bearbeitenden Werkstücken handelt es sich insbesondere um Werkstücke, die zumindest teilweise aus Holz, Holzwerkstoffen, Kunststoff, Verbundwerkstoff oder dergleichen ausgebildet sind. Dabei kann es sich um unterschiedliche Werkstücke handeln, beispielsweise Massivholz- oder Spanplatten, Leichtbauplatten, Sandwichplatten, Fußbodenleisten, Profile oder dergleichen. Bevorzugt sind die Werkstücke plattenförmige Werkstücke. Die vorliegende Erfindung ist jedoch nicht auf die Bearbeitung derartiger Werkstücke und Werkstoffe beschränkt.

Die Mehrprofilfräsvorrichtung 10 umfasst eine erste Fräseinrichtung 11, eine zweite Fräseinrichtung 12 und eine Tastrolle 26. Die beiden Fräseinrichtungen 11, 12 sind jeweils durch einen Grundkörper gebildet, die koaxial zueinander angeordnet und um eine gemeinsame Drehachse R drehbar sind. Die Fräseinrichtungen 11, 12 bilden jeweils einen im Wesentlichen rotationsymmetrischen Körper.

Die erste Fräseinrichtung 11 ist zur Übertragung eines Drehmoments drehfest mit einer Antriebswelle 13 koppelbar, beispielsweise durch eine Schraubverbindung. Ebenso können die erste Fräseinrichtung 11 und die Antriebswelle 13 integral ausgebildet sein. Die Antriebswelle 13 kann durch eine nicht näher dargestellte Schnittstelle mit einer Antriebsvorrichtung der Bearbeitungseinrichtung 20 koppelbar sein. Ebenso kann die Antriebswelle 13 eine Komponente der Bearbeitungseinrichtung 20 sein und über eine Schnittstelle mit der ersten Fräseinrichtung 11 drehfest gekoppelt werden.

Die zweite Fräseinrichtung 12 ist koaxial zur ersten Fräseinrichtung 11 vorgesehen und mit einem Innenumfang 14 an einem Außenumfang 16 der ersten Fräseinrichtung 11 angeordnet. Der Außenumfang 16 der ersten Fräseinrichtung 11 und der Innenumfang 14 der zweiten Fräseinrichtung 12 sind zumindest abschnittsweise parallel zur gemeinsamen Drehachse R ausgebildet. Dadurch ist die zweite Fräseinrichtung 12 am Außenumfang 14 der ersten Fräseinrichtung 11 axial verschiebbar zur ersten Fräseinrichtung 11 vorgesehen. Ein über die Antriebswelle 13 eingeleitetes Drehmoment kann über die erste Fräseinrichtung 11 auf die zweite Fräseinrichtung 12 übertragen werden, sodass sich die beiden Fräseinrichtungen 11, 12 im Gleichlauf befinden. Der Gleichlauf kann beispielsweise durch einen Mitnehmer oder ein Formprofil realisiert sein. Dadurch ist die zweite Fräseinrichtung 12 sowohl axial verschiebbar als auch drehfest mit der ersten Fräseinrichtung 11 gekoppelt.

An einer Stirnseite der ersten Fräseinrichtung 11 ist ein erstes Fräswerkzeug 18 vorgesehen, das ein erstes Bearbeitungsprofil 19 zum Bearbeiten des Werkstücks bildet. Insbesondere ist das erste Bearbeitungsprofil 19 als ein definierter Fräsradius oder eine definierte Fräsfase zum Bearbeiten der Werkstückkante ausgebildet. Das erste Fräswerkzeug 18 kann durch Befestigungsmittel an der ersten Fräseinrichtung 11 lösbar befestigt sein. Das erste Fräswerkzeug 18 ist in einer fixen Arbeitsposition angeordnet und fräst durch eine Drehbewegung um die Drehachse R und eine Relativbewegung zwischen dem Werkstück und der Mehrprofilfräsvorrichtung 10 eine Kante des Werkstücks auf das entsprechende erste Bearbeitungsprofil 19.

An einer Stirnseite der zweiten Fräseinrichtung 12, die dem ersten Fräswerkzeug 18 zugeordnet ist, ist ein zweites Fräswerkzeug 21 vorgesehen, das ein zweites Bearbeitungsprofil 22 zum Bearbeiten des Werkstücks bildet. Insbesondere ist das zweite Bearbeitungsprofil 22 als ein vom ersten Bearbeitungsprofil 19 abweichender Fräsradius oder eine abweichende Fräsfase ausgebildet. Das zweite Bearbeitungsprofil 22 des zweiten Fräswerkzeugs 21 kann einen kleineren Fräsradius aufweisen als das erste Bearbeitungsprofil 19 des ersten Fräswerkzeugs 18. Das zweite Fräswerkzeug 21 kann durch Befestigungsmittel an der zweiten Fräseinrichtung 12 befestigt sein.

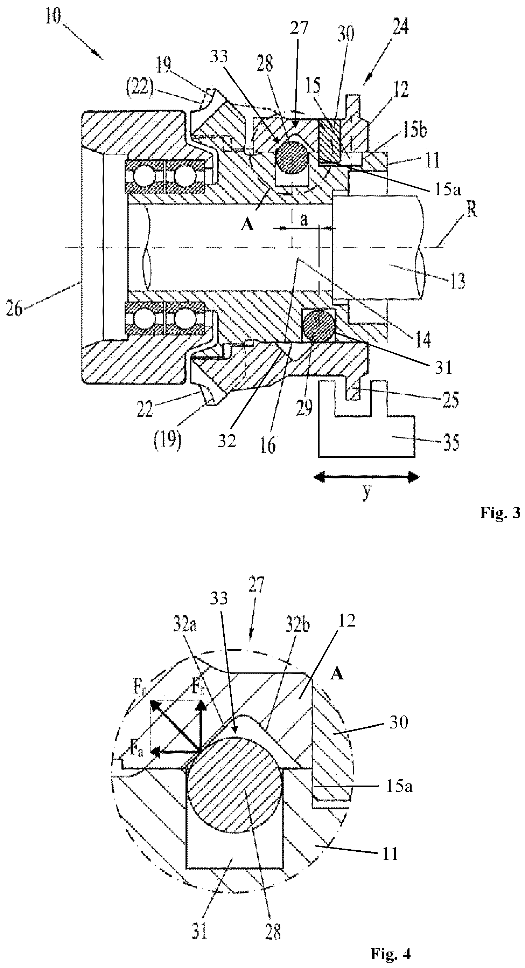

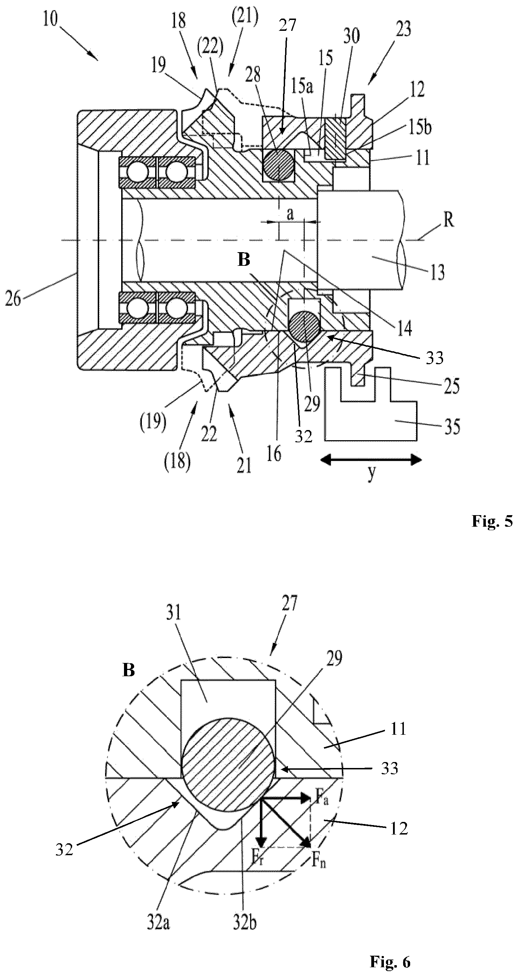

Die Figuren 3 und 5 zeigen jeweils Schnittansichten der Mehrprofilfräsvorrichtung 10, wobei in Figur 3 die zweite Fräseinrichtung 12 in einer Gebrauchsposition 24 vorgesehen ist und in Figur 5 die erste Fräseinrichtung 11 in der Arbeitsposition vorgesehen ist. Durch die axiale Verschiebung der zweiten Fräseinrichtung 12 relativ zur ersten Fräseinrichtung 11 wird diese aus der in Figur 3 dargestellten Gebrauchsposition 24 in die in Figur 5 dargestellten Nichtgebrauchsposition 23 überführt. In der Gebrauchsposition 24 ist das zweite Fräswerkzeug 21 derart in einer Arbeitsposition angeordnet, dass Schneidelemente des zweiten Fräswerkzeugs 21 der zweiten Fräseinrichtung 12 in Zwischenräume zwischen Schneidelementen des ersten Fräswerkzeugs 18 der ersten Fräseinrichtung 11 eingreifen, so dass das zweite Bearbeitungsprofil 22 des zweiten Fräswerkzeugs 21 das erste Bearbeitungsprofil 19 des ersten Fräswerkzeugs 18 überlagert. Die Mehrprofilfräsvorrichtung 10 ist folglich derart eingerichtet, dass das zweite Bearbeitungsprofil 22 des zweiten Fräswerkzeugs 21 das erste Bearbeitungsprofil 19 des ersten Fräswerkzeugs 18 in der Weise überlagert, dass das Werkstück durch das zweite Bearbeitungsprofil 22 bearbeitet wird, wenn sich die zweite Fräseinrichtung 12 in der Gebrauchsposition 24 befindet. Dadurch ist sichergestellt, dass, obwohl beide Fräswerkzeuge 18, 21 gleichzeitig ein Werkstück bearbeiten, nur das Bearbeitungsprofil 22 des zweiten Fräswerkzeugs 21 auf das Werkstück übertragen wird.

Zum Ausführen eines geführten Bearbeitungsvorgangs weist die Mehrprofilfräsvorrichtung 10 zudem die Tastrolle 26 auf. Diese rollt während des Bearbeitungsvorgangs mit einem Außenumfang auf einer zur Werkstückkante benachbarten Werkstückoberfläche ab und führt auf diese Weise die Mehrprofilfräsvorrichtung 10 zum Werkstück. Die Tastrolle 26 ist drehentkoppelt an der ersten Fräseinrichtung 11 gelagert, beispielsweise durch ein oder mehrere Wälzlager. Somit kann die Tastrolle 26 die Abrollbewegung auf der Werkstückoberfläche unabhängig von der Drehbewegung der Fräseinrichtungen 11, 12 ausführen. Die Tastrolle 26 kann beispielsweise in einer stirnseitigen Bohrung in der ersten Fräseinrichtung 11 gelagert sein. Die erste und die zweite Fräseinrichtung 11, 12 weisen einen gleichen Basisdurchmesser auf, so dass mit jeder der Fräseinrichtungen 11, 12 der Bearbeitungsvorgang in Zusammenwirken mit der Tastrolle 26 ausgeführt werden kann.

Figur 3 zeigt eine Arretierungseinrichtung 27, welche die zweite Fräseinrichtung 12 während der Drehbewegung der Fräseinrichtungen 11, 12 in axialer Richtung arretiert. Die Arretierungseinrichtung 27 weist mehrere Fliehkraftelemente 28, 29 auf und ist während der Drehbewegung zwischen den beiden Fräseinrichtungen 11, 12 wirkend angeordnet. Während der Drehbewegung der Fräseinrichtungen 11, 12 arretiert ein erstes Fliehkraftelement 28 die zweite Fräseinrichtung 12 in der Gebrauchsposition 24 (Figur 3) und ein zweites Fliehkraftelement 29 arretiert die zweite Fräseinrichtung 12 in der Nichtgebrauchsposition 23 (Figur 5).

Die Fliehkraftelemente 28, 29 sind in einem Abstand a in einer axialen Richtung zueinander beabstandet am Außenumfang 16 der ersten Fräseinrichtung 11 angeordnet. Die Fliehkraftelemente 28, 29 sind somit in zwei axial zueinander beabstandeten Ebenen, die senkrecht zur Drehachse R verlaufen, am Außenumfang 16 vorgesehen. Der Abstand a kann bevorzugt relativ klein vorgesehen sein, um einen möglichst kurzen Stellweg zwischen der Gebrauchsposition 24 und der Nichtgebrauchsposition 23 auszubilden. Hierzu können sich die Fliehkraftelemente 28, 29 in einer radialen Ebene innerhalb des Abstands a zumindest teilweise überlappen. Vorteilhaft kann hierbei sein, Fliehkraftelemente 28, 29 mit möglichst kleinem Durchmesser zu verwenden. Um mit kleinen Fliehkraftelementen 28, 29 die zur sicheren Arretierung erforderlichen Fliehkräfte zu erzeugen, können mehrere Fliehkraftelemente 28, 29 verwendet werden. Ebenso können die Fliehkraftelemente 28, 29 aus einem Werkstoff mit hoher Dichte, z.B. Hartmetall, ausgebildet sein. Vorzugsweise sind die Fliehkraftelemente 28, 29 an der ersten Fräseinrichtung 11 in der Weise zueinander angeordnet, dass eine Unwucht verhindert ist.

Bei der nachfolgenden Beschreibung ist zu beachten, dass jeweils mehrere Fliehkraftelemente 28, 29 in einer gemeinsamen Ebene senkrecht zur Drehachse R am Außenumfang 16 der ersten Fräseinrichtung 11 vorgesehen sein können, auch wenn nachfolgend nur jeweils ein Fliehkraftelement 28, 29 beschrieben ist. Die Fliehkraftelemente 28, 29 sind jeweils in einer Ausnehmung 31 am Außenumfang 16 der ersten Fräseinrichtung 11 aufgenommen. Die Ausnehmungen 31 sind insbesondere als Bohrungen ausgebildet.

Zu den Fliehkraftelementen 28, 29 korrespondierend ist eine Vertiefung 32 am Innenumfang 14 der zweiten Fräseinrichtung 12 ausgebildet, die durch die axiale Verschiebung der zweiten Fräseinrichtung 12 relativ zur ersten Fräseinrichtung 11 zu den Fliehkraftelementen 28, 29 positionierbar ist. Die Vertiefung 32 kann in einer axialen Ebene vollumfänglich am Innenumfang 14 ausgebildet sein. Die Vertiefung kann eine Rille oder Nut sein. Ebenso kann vorgesehen sein, dass mehrere Vertiefungen 32 in einer gemeinsamen axialen Ebene am Innenumfang 14 ausgebildet sind, wobei die Vertiefungen 32 jeweils zu korrespondierenden Fliehkraftelementen 28, 29 ausgerichtet sind.

In der Gebrauchsposition 24 ist die Vertiefung 32 zu dem ersten Fliehkraftelement 28 positioniert, so dass bei einer Drehbewegung der Fräseinrichtungen 11, 12 das erste Fliehkraftelement 28 aufgrund der Fliehkraft in eine Arretierungsposition 33 überführt wird, in der das erste Fliehkraftelement 28 sowohl teilweise in der Ausnehmung 31 als auch in der Vertiefung 32 angeordnet ist. Solange die Drehbewegung ausgeführt wird, ist auf diese Weise die axiale Arretierung der zweiten Fräseinrichtung 12 in der Gebrauchsposition 23 gebildet.

In der Ausführungsform der Mehrprofilfräsvorrichtung 10 gemäß Figur 3 sind die Fliehkraftelemente 28, 29 jeweils als eine Kugel ausgebildet. Der Durchmesser der kugelförmigen Fliehkraftelemente 28, 29 ist minimal kleiner vorgesehen als ein Durchmesser oder eine axiale Breite der Ausnehmung 31. Dadurch ist ein axiales Spiel der Fliehkraftelemente 28, 29 in den Ausnehmungen 31 minimal und gleichzeitig eine radiale Bewegung der Fliehkraftelemente 28, 29 ermöglicht. Um während der Drehbewegung eine große Fliehkraft zur Arretierung zu erzeugen, sind die Fliehkraftelemente 28, 29 insbesondere aus einem metallischen Werkstoff ausgebildet.

Die Vertiefung 32 ist im Längsschnitt der Mehrprofilfräsvorrichtung 10 V-förmig ausgebildet. Die Tiefe der V-förmigen Vertiefung 32 kann in der Weise ausgebildet sein, dass die kugelförmigen Fliehkraftelemente 28, 29 in der Arretierungsposition 33 mindestens zur Hälfte in der Ausnehmung 31 angeordnet sind.

Durch die V-förmige Ausgestaltung der Vertiefung 32 in Verbindung mit einem Anschlagelement 30 und zwei Anschlägen 15a, 15b einer Ausnehmung 15 zwischen der ersten und zweiten Fräseinrichtung 11, 12 ist eine Zentrierung der zweiten Fräseinrichtung 12 in der Gebrauchsposition 24 und der Nichtgebrauchsposition 23 ausgebildet, wenn das Fliehkraftelement 28, 29 während der Drehbewegung in der Arretierungsposition 33 angeordnet ist und an einer der Schrägflächen 32a, 32b der V-förmigen Vertiefung 32 anliegt. Aufgrund dieser Zentrierung ist während des Bearbeitungsvorgangs am Werkstück eine exakte Positionierung des zweiten Fräswerkzeugs 18 in der Gebrauchsposition 24 oder der Nichtgebrauchsposition 23 ausgebildet.

Figur 4 zeigt eine Detailansicht der Arretierungseinrichtung 27 gemäß dem Detail A in Figur 3, in welcher das Fliehkraftelement 28 in die Arretierungsposition 33 überführt ist und die zweite Fräseinrichtung 12 in der Gebrauchsposition 24 arretiert. Dabei ist die Vertiefung 32 in der Weise zu dem Fliehkraftelement 28 angeordnet, dass das Fliehkraftelement 28 nur auf die auf der Seite der Gebrauchsposition 24 angeordnete Schrägfläche 32a der V-förmigen Vertiefung 32 wirkt. Dadurch wird die radial wirkende Fliehkraft Fᵣ an der Schrägfläche 32a umgelenkt und eine Axialkraftkomponente Fₐ gebildet, welche die zweite Fräseinrichtung 12 mit dem Anschlagelement 30 gegen den die Gebrauchsposition 24 definierenden Anschlag 15a drückt. Fₐ und Fᵣ ergeben zusammen die Normalkraft Fₙ, die senkrecht auf die Seitenwandung 32a wirkt.

Durch die kugelförmige Ausgestaltung der Fliehkraftelemente 28, 29 sowie durch die V-förmige Ausgestaltung der Vertiefung 32 wird die zweite Fräseinrichtung 12 bei einer Reduzierung der Drehzahl oder einem Stillstand der Mehrprofilfräsvorrichtung 10 automatisch freigegeben, so dass die axiale Bewegung der zweiten Fräseinrichtung 12 möglich ist.

Figur 5 zeigt eine schematische Schnittansicht der Mehrprofilfräsvorrichtung 10 mit dem zweiten Fräswerkzeug 12 in der Nichtgebrauchsposition 23 und Figur 6 eine Detailansicht der Arretierungseinrichtung 27 gemäß dem Detail B in Figur 5.

In der Nichtgebrauchsposition 23 ist die Vertiefung 32 zu dem zweiten Fliehkraftelement 29 positioniert, so dass bei der Drehbewegung der Fräseinrichtungen 11, 12 das zweite Fliehkraftelement 29 aufgrund der Fliehkraft in die Arretierungsposition 33 überführt wird, in der das zweite Fliehkraftelement 29 sowohl teilweise in der Ausnehmung 31 als auch in der Vertiefung 32 angeordnet ist. Solange die Drehbewegung ausgeführt wird, ist auf diese Weise eine axiale Arretierung der zweiten Fräseinrichtung 12 in der Nichtgebrauchsposition 23 gebildet.

Wie die Detailansicht gemäß Figur 6 zeigt, wirkt das Fliehkraftelement 29 in der Arretierungsposition 33 nur auf die auf der Seite der Nichtgebrauchsposition 23 angeordnete Schrägfläche 32b der V-förmigen Vertiefung 32. Die radial wirkende Fliehkraft Fᵣ wird an der Schrägfläche 32b umgelenkt und erzeugt die Axialkraftkomponente Fₐ, welche die zweite Fräseinrichtung 12 mit dem Anschlagelement 30 gegen den die Nichtgebrauchsposition 23 definierenden Anschlag 15b drückt.

Die Arretierungseinrichtung 27 dieser ersten Ausführungsform der Mehrprofilfräsvorrichtung 10 kann alternativ in der Weise ausgestaltet sein, dass die zweite Fräseinrichtung 12 in der Nichtgebrauchsposition 23 durch den Kontakt des zweiten Fliehkraftelements 29 an beiden Schrägflächen 32a, 32b der Vertiefung 32 arretiert ist. In diesem Fall ist nicht vorgesehen, dass das Anschlagelement 30 in der Nichtgebrauchsposition 23 den Anschlag 15b berührt.

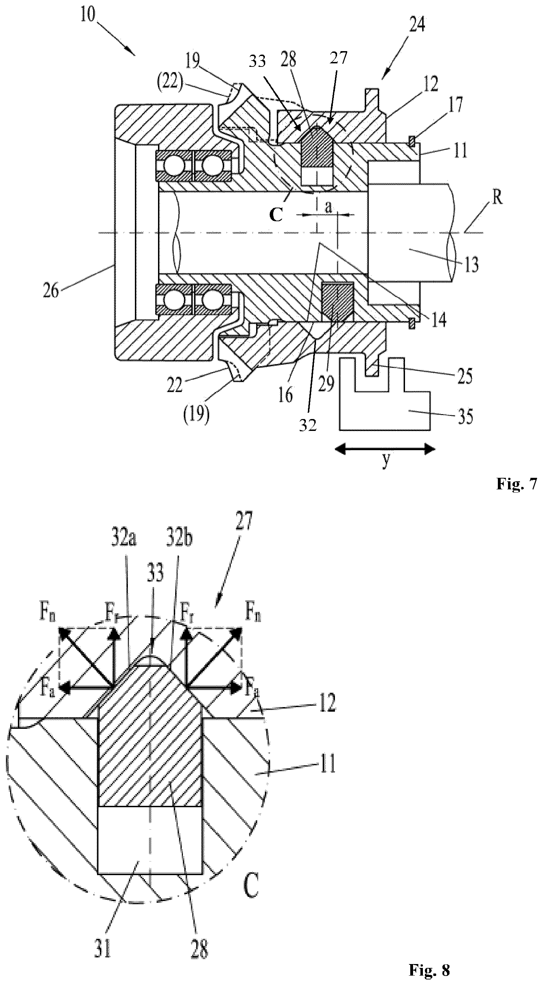

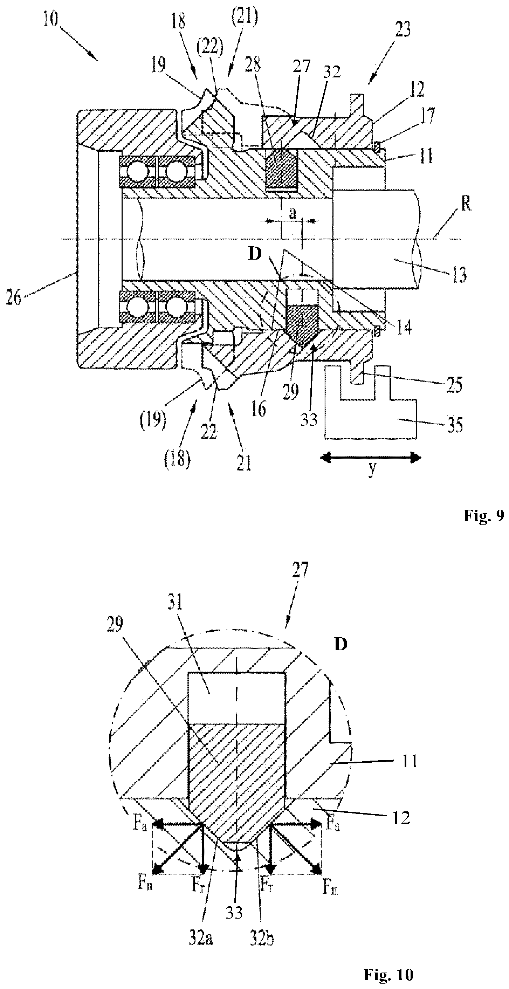

Die Figuren 7 bis 10 zeigen Schnittansichten einer alternativen Ausführungsform der Mehrprofilfräsvorrichtung 10, wobei in Figur 7 die zweite Fräseinrichtung 12 in der Gebrauchsposition 24 angeordnet ist und in Figur 9 in der Nichtgebrauchsposition 23. Die Figuren 8 und 10 zeigen Detailansichten der Arretierungseinrichtung 27. Bei dieser alternativen Ausführungsform der Mehrprofilfräsvorrichtung 10 erfolgt die Positionierung der zweiten Fräseinrichtung 12 in der Gebrauchsposition 24 und in der Nichtgebrauchsposition 23 ausschließlich durch die Fliehkraftelemente 28 und 29.

Die Fliehkraftelemente 28, 29 sind bei dieser Ausführungsform zylinderförmig mit einer kegelförmigen Stirnseite ausgebildet. Die Zylinderform ermöglicht bei gleichem Durchmesser die Masse und damit die Fliehkraft gegenüber kugelförmigen Fliehkraftelementen 28, 29 zu erhöhen. Jedoch können auch bei dieser Ausführungsform die Fliehkraftelemente 28, 29 als Kugel ausgebildet sein. Ebenso können die kugelförmigen Fliehkraftelemente 28, 29 der ersten Ausführungsform der Mehrprofilfräsvorrichtung 10 als solche zylinderförmigen Fliehkraftelemente 28, 29 ausgebildet sein. Sowohl in der Gebrauchsposition 24 (Figuren 7 und 8) als auch in der Nichtgebrauchsposition 23 (Figur 9 und 10) wirkt das Fliehkraftelement 28 bzw. 29 mit der kegelförmigen Stirnseite auf beide Schrägflächen 32a, 32b der V-förmigen Vertiefung 32. Dadurch werden zwei Axialkraftkomponenten Fₐ in axial gegensätzliche Richtungen erzeugt, wodurch die zweite Fräseinrichtung 12 axial fixiert wird.

Eine axiale Begrenzung eines maximalen Stellweges ist hierbei in Richtung der Gebrauchsposition 24 durch einen Kontakt der zweiten Fräseinrichtung 12 mit einem Absatz der ersten Fräseinrichtung 11 vorgesehen. In Richtung der Nichtgebrauchsposition 23 ist eine axiale Begrenzung der Stellbewegung der zweiten Fräseinrichtung 12 durch einen weiteren Absatz 17 vorgesehen, der beispielsweise in Form eines Sprengrings ausgebildet ist.

Alternativ zur Begrenzung der axialen Stellbewegung durch den Absatz 17 sowie den weiteren Absatz, kann analog zu der ersten Ausführungsform ein Anschlagelement 30 an der zweiten Fräseinrichtung 12 vorgesehen sein, dessen Stellweg durch die Anschlagflächen 15a, 15b der Ausnehmung 15 begrenzt ist. Bei dieser Ausführungsform ist das Anschlagelement 30 jedoch ausschließlich zur Begrenzung eines maximalen axialen Stellwegs vorgesehen und nicht zur Positionierung der zweiten Fräseinrichtung 12 in der Gebrauchsposition 24 oder der Nichtgebrauchsposition 23.

Um die zweite Fräseinrichtung 12 zwischen der Nichtgebrauchsposition 23 und der Gebrauchsposition 24 axial zu bewegen, kann an der Bearbeitungseinrichtung 20 eine Stelleinrichtung 35 vorgesehen sein, welche die axiale Stellbewegung ansteuert. Die Stelleinrichtung 35 kann sowohl durch mechanische Mittel oder pneumatische Mittel oder auch durch einen elektrischen oder magnetischen Antrieb ausgebildet sein. Wie in den Figuren 3, 5, 7 und 9 gezeigt, wirkt die Stelleinrichtung 35 mit einem Vorsprung 25 an der zweiten Fräseinrichtung 12 und ändert dessen Position in axialer Richtung y zwischen der Gebrauchsposition 24 und der Nichtgebrauchsposition 23. Dabei kann die Stellbewegung sowohl von der Stelleinrichtung 35 relativ zur feststehenden Bearbeitungseinrichtung 20 ausgeführt werden oder auch umgekehrt durch eine Stellbewegung der Bearbeitungseinrichtung 20 relativ zu einer ortsfesten Stelleinrichtung 35.

Ergänzend kann die Bearbeitungseinrichtung eine Sensoreinrichtung 34 (Figur 1) zur Erfassung der Position der zweiten Fräseinrichtung 12 aufweisen. Die Sensoreinrichtung 34 kann wenigstens zwei Sensoren aufweisen, welche die Positionierung der zweiten Fräseinrichtung 12 in der Gebrauchsposition 24 und der Nichtgebrauchsposition 23 erfasst. Die Sensoreinrichtung 34 kann ein Sensorsignal an eine Steuerungseinrichtung der Bearbeitungseinrichtung übermitteln und in Abhängigkeit von dem Steuerungssignal kann der Bearbeitungsvorgang und/oder die Stellbewegung der zweiten Fräseinrichtung 12 angesteuert werden.

## Patentansprüche

1. Mehrprofilfräsvorrichtung (10) zur spanenden Bearbeitung von Werkstücken, die bevorzugt aus Holz, Holzwerkstoffen, Kunststoff, Verbundwerkstoff und/oder dergleichen ausgebildet sind, insbesondere zur Bearbeitung von Kanten der Werkstücke, mit einer ersten Fräseinrichtung (11), die wenigstens ein erstes Fräswerkzeug (18) mit einem ersten Bearbeitungsprofil (19) aufweist, wobei die erste Fräseinrichtung (11) in einer Arbeitsposition vorgesehen ist und mit einer Antriebswelle (13) koppelbar ist, und mit zumindest einer zweiten Fräseinrichtung (12), die wenigstens ein zweites Fräswerkzeug (21) mit einem zweiten Bearbeitungsprofil (22) aufweist, wobei die zumindest eine zweite Fräseinrichtung (12) relativ zur ersten Fräseinrichtung (11) zwischen einer Gebrauchsposition (24) und einer Nichtgebrauchsposition (23) bewegbar ist,
**dadurch gekennzeichnet, dass**
eine Arretierungseinrichtung (27) mit wenigstens einem Fliehkraftelement (28, 29) vorgesehen ist und das wenigstens eine Fliehkraftelement (28, 29) die zumindest eine zweite Fräseinrichtung (12) während einer Drehbewegung der Fräseinrichtungen (11, 12) in der Gebrauchsposition (24) oder der Nichtgebrauchsposition (23) arretiert.

2. Mehrprofilfräsvorrichtung nach Anspruch 1, bei der ferner die erste Fräseinrichtung (11) und die zumindest eine zweite Fräseinrichtung (12) koaxial zueinander angeordnet sind und die Arretierungseinrichtung (27) zwischen den Fräseinrichtungen (11, 12) wirkend angeordnet ist.

3. Mehrprofilfräsvorrichtung nach Anspruch 1 oder 2, bei der ferner die zumindest eine zweite Fräseinrichtung (12) axial verschiebbar und drehfest mit der ersten Fräseinrichtung (11) gekoppelt ist.

4. Mehrprofilfräsvorrichtung nach einem der vorhergehenden Ansprüche, bei der ferner die Arretierungseinrichtung (27) wenigstens zwei Fliehkraftelemente (28, 29) aufweist, wobei wenigstens ein erstes Fliehkraftelement (28) die zweite Fräseinrichtung (12) in der Gebrauchsposition (24) arretiert und wenigstens ein zweites Fliehkraftelement (29) die zweite Fräseinrichtung (12) in der Nichtgebrauchsposition (23) arretiert.

5. Mehrprofilfräsvorrichtung nach Anspruch 4, bei der ferner die wenigstens zwei Fliehkraftelemente (28, 29) jeweils in einer Ausnehmung (31) am Außenumfang (16) der ersten Fräseinrichtung (11) aufgenommen sind und an einem Innenumfang (14) der zweiten Fräseinrichtung (12) zumindest eine Vertiefung (32) ausgebildet ist, die in der Gebrauchsposition (24) der zweiten Fräseinrichtung (12) zu dem wenigstens einen ersten Fliehkraftelement (28) positioniert ist und in der Nichtgebrauchsposition (23) der zweiten Fräseinrichtung (12) zu dem wenigstens einen zweiten Fliehkraftelement (29).

6. Mehrprofilfräsvorrichtung nach einem der Ansprüche 1 bis 3, bei der ferner das wenigstens eine Fliehkraftelement (28, 29) in einer Ausnehmung (31) am Außenumfang (16) der ersten Fräseinrichtung (11) aufgenommen ist und am Innenumfang (14) der zweiten Fräseinrichtung (12) zumindest zwei Vertiefungen (32) axial beabstandet zueinander ausgebildet sind, wobei in der Gebrauchsposition (24) der zweiten Fräseinrichtung (12) eine erste Vertiefung (32) zu dem Fliehkraftelement (28, 29) positioniert ist und in der Nichtgebrauchsposition (23) eine zweite Vertiefung (32) zu dem Fliehkraftelement (28, 29) positioniert ist.

7. Mehrprofilfräsvorrichtung nach Anspruch 5 oder 6, bei der ferner durch die Drehbewegung der Fräseinrichtungen (11, 12) zumindest ein Fliehkraftelement (28, 29) in eine Arretierungsposition (33) überführt ist, in der das zumindest eine Fliehkraftelement (28, 29) teilweise in der Ausnehmung (31) am Außenumfang (16) der ersten Fräseinrichtung (11) und teilweise in der zumindest einen korrespondierenden Vertiefung (32) am Innenumfang (14) der zweiten Fräseinrichtung (12) angeordnet ist.

8. Mehrprofilfräsvorrichtung nach einem der vorhergehenden Ansprüche, bei der ferner das wenigstens eine Fliehkraftelement (28, 29) als eine Kugel oder als ein zylinderförmiger Körper, dessen radial nach außen weisende Stirnseite abgerundet oder kegelförmig ist, ausgebildet ist.

9. Mehrprofilfräsvorrichtung nach einem der Ansprüche 5 bis 8, bei der ferner die zumindest eine Vertiefung (32) am Innenumfang (14) der zweiten Fräseinrichtung (12) im Längsschnitt der zweiten Fräseinrichtung (12) eine der auf der Seite der Gebrauchsposition (24) angeordnete Schrägfläche (32a) aufweist, vorzugsweise V-förmig ausgebildet ist.

10. Mehrprofilfräsvorrichtung nach Anspruch 9, bei der ferner das wenigstens eine erste Fliehkraftelement (28) in der Arretierungsposition (33) in der Weise auf die Schrägfläche (32a) der zumindest einen Vertiefung (32) wirkt, dass eine Axialkraftkomponente (Fₐ) gebildet ist, welche die zweite Fräseinrichtung (12) in der Gebrauchsposition (24) gegen wenigstens einen die Gebrauchsposition (24) definierenden Anschlag (15a) drückt,
wobei bevorzugt ferner der wenigstens eine die Gebrauchsposition (24) und/oder die Nichtgebrauchsposition (23) definierende Anschlag (15a, 15b) zumindest eine punktförmige oder nockenförmige Anschlagfläche aufweist.

11. Mehrprofilfräsvorrichtung nach Anspruch 10, bei der ferner zumindest der wenigstens eine die Gebrauchsposition (24) definierende Anschlag (15a) durch eine Justiereinrichtung axial verschiebbar vorgesehen ist.

12. Mehrprofilfräsvorrichtung nach einem der Ansprüche 5 bis 11, bei der ferner eine Tiefe der Vertiefung (32) in der Weise ausgebildet ist, dass das wenigstens eine kugelförmige oder zylinderförmige Fliehkraftelement (28, 29) in der Arretierungsposition (33) zumindest zur Hälfte in der Ausnehmung (31) angeordnet ist.

13. Bearbeitungseinrichtung (20) zur spanenden Bearbeitung von Werkstücken, die bevorzugt aus Holz, Holzwerkstoffen, Kunststoff, Verbundwerkstoff und/oder dergleichen ausgebildet sind, insbesondere zur Bearbeitung von Kanten der Werkstücke, aufweisend eine Werkstückauflage zum Aufnehmen wenigstens eines Werkstücks, eine Mehrprofilfräsvorrichtung (10) zum Ausführen des spanenden Bearbeitungsvorgangs am Werkstück, eine Antriebsvorrichtung zum Antreiben der Mehrprofilfräsvorrichtung (10) sowie eine Fördereinrichtung zum Herbeiführen einer Relativbewegung zwischen dem Werkstück und der Mehrprofilfräsvorrichtung (10),
**dadurch gekennzeichnet, dass**
die Mehrprofilfräsvorrichtung (10) nach einem der Ansprüche 1 bis 12 ausgebildet ist.

14. Bearbeitungseinrichtung nach Anspruch 13, bei der ferner eine Stelleinrichtung (35) vorgesehen ist, die eine Stellbewegung der zumindest einen zweiten Fräseinrichtung (12) zwischen der Gebrauchsposition (24) und der Nichtgebrauchsposition (23) ansteuert.

15. Bearbeitungseinrichtung nach Anspruch 13 oder 14, bei der ferner eine Sensoreinrichtung (34) vorgesehen ist, welche eine Stellposition der zumindest einen zweiten Fräseinrichtung (12) erfasst.

## Claims

1. Multi-profile milling apparatus (10) for the material-removal machining of workpieces that are preferably made of wood, wood-based materials, plastics material, composite material and/or the like, in particular for machining edges of the workpieces, comprising a first milling device (11) which has at least one first milling tool (18) having a first machining profile (19), wherein the first milling device (11) is provided in a working position and can be coupled to a drive shaft (13), and comprising at least one second milling device (12) which has at least one second milling tool (21) having a second machining profile (22), wherein the at least one second milling device (12) can be moved relative to the first milling device (11) between an in-use position (24) and an out-of-use position (23),
**characterised in that**
a locking device (27) comprising at least one centrifugal-force element (28, 29) is provided and the at least one centrifugal-force element (28, 29) locks the at least one second milling device (12) during a rotary movement of the milling devices (11, 12) in the in-use position (24) or the out-of-use position (23).

2. Multi-profile milling apparatus according to claim 1, wherein the first milling device (11) and the at least one second milling device (12) are further arranged coaxially with one another and the locking device (27) is further arranged so as to act between the milling devices (11, 12).

3. Multi-profile milling apparatus according to claim 1 or 2, wherein the at least one second milling device (12) is further axially displaceable and coupled to the first milling device (11) for conjoint rotation therewith.

4. Multi-profile milling apparatus according to any of the preceding claims, wherein the locking device (27) further comprises at least two centrifugal-force elements (28, 29), wherein at least one first centrifugal-force element (28) locks the second milling device (12) in the in-use position (24) and at least one second centrifugal-force element (29) locks the second milling device (12) in the out-of-use position (23).

5. Multi-profile milling apparatus according to claim 4, wherein the at least two centrifugal-force elements (28, 29) are further received in each case in a recess (31) on the outer periphery (16) of the first milling device (11) and at least one depression (32) is further formed on an inner periphery (14) of the second milling device (12), which depression is positioned facing the at least one first centrifugal-force element (28) in the in-use position (24) of the second milling device (12) and facing the at least one second centrifugal-force element (29) in the out-of-use position (23) of the second milling device (12).

6. Multi-profile milling apparatus according to any of claims 1 to 3, wherein the at least one centrifugal-force element (28, 29) is further received in a recess (31) on the outer periphery (16) of the first milling device (11) and at least two depressions (32) are further formed on the inner periphery (14) of the second milling device (12) so as to be axially spaced apart from one another, wherein a first depression (32) is positioned facing the centrifugal-force element (28, 29) in the in-use position (24) of the second milling device (12) and a second depression (32) is positioned facing the centrifugal-force element (28, 29) in the out-of-use position (23).

7. Multi-profile milling apparatus according to claim 5 or 6, wherein at least one centrifugal-force element (28, 29) is transferred into a locking position (33) by means of the rotary movement of the milling devices (11, 12), in which locking position the at least one centrifugal-force element (28, 29) is arranged partially in the recess (31) on the outer periphery (16) of the first milling device (11) and partially in the at least one corresponding depression (32) on the inner periphery (14) of the second milling device (12).

8. Multi-profile milling apparatus according to any of the preceding claims, wherein the at least one centrifugal-force element (28, 29) is further designed as a sphere or as a cylindrical body, the radially outwardly facing front side of which is rounded or conical.

9. Multi-profile milling apparatus according to any of claims 5 to 8, wherein the at least one depression (32) on the inner periphery (14) of the second milling device (12), in the longitudinal section of the second milling device (12), further has an inclined surface (32a) arranged on the side of the in-use position (24), preferably is designed to be V-shaped.

10. Multi-profile milling apparatus according to claim 9, wherein the at least one first centrifugal-force element (28) further acts on the inclined surface (32a) of the at least one depression (32) in the locking position (33) in such a way that an axial-force component (Fₐ) is formed which presses the second milling device (12) in the in-use position (24) against at least one stop (15a) defining the in-use position (24),
wherein the at least one stop (15a, 15b) defining the in-use position (24) and/or the out-of-use position (23) preferably further comprises at least one punctiform or cam-shaped stop surface.

11. Multi-profile milling apparatus according to claim 10, wherein at least the at least one stop (15a) defining the in-use position (24) is further provided so as to be axially displaceable by means of an adjustment device.

12. Multi-profile milling apparatus according to any of claims 5 to 11, wherein a depth of the depression (32) is further designed such that the at least one spherical or cylindrical centrifugal-force element (28, 29) is arranged at least half-way in the recess (31) in the locking position (33).

13. Machining device (20) for the material-removal machining of workpieces that are preferably made of wood, wood-based materials, plastics material, composite material and/or the like, in particular for machining edges of the workpieces, comprising a workpiece support for receiving at least one workpiece, a multi-profile milling apparatus (10) for performing the material-removal machining process on the workpiece, a drive apparatus for driving the multi-profile milling apparatus (10) and a conveying device for bringing about a relative movement between the workpiece and the multi-profile milling apparatus (10),
**characterised in that**
the multi-profile milling apparatus (10) is designed according to any of claims 1 to 12.

14. Machining device according to claim 13, wherein a setting device (35) is further provided which triggers a setting movement of the at least one second milling device (12) between the in-use position (24) and the out-of-use position (23).

15. Machining device according to claim 13 or 14, wherein a sensor device (34) is further provided which detects a setting position of the at least one second milling device (12).

## Revendications

1. Appareil de fraisage multi-profil (10) pour l'usinage par enlèvement de copeaux de pièces à usiner qui sont formées de préférence en bois, matériaux dérivés du bois, matière plastique, matériau composite et/ou similaires, notamment pour l'usinage de bords des pièces à usiner, avec un premier dispositif de fraisage (11) qui présente au moins un premier outil de fraisage (18) avec un premier profil d'usinage (19), le premier dispositif de fraisage (11) étant prévu dans une position de travail et étant apte à être relié à un arbre d'entraînement (13), et avec au moins un second dispositif de fraisage (12) qui présente au moins un second outil de fraisage (21) avec un second profil d'usinage (22), ledit au moins un second dispositif de fraisage (12) étant mobile par rapport au premier dispositif de fraisage (11) entre une position d'utilisation (24) et une position de non-utilisation (23),
**caractérisé en ce que**
un dispositif de blocage (27) est prévu avec au moins un élément centrifuge (28, 29) et ledit au moins un élément centrifuge (28, 29) bloque ledit au moins un second dispositif de fraisage (12) pendant un mouvement de rotation des dispositifs de fraisage (11, 12) dans la position d'utilisation (24) ou la position de non-utilisation (23).

2. Appareil de fraisage multi-profil selon la revendication 1, dans lequel le premier dispositif de fraisage (11) et ledit au moins un second dispositif de fraisage (12) sont de plus disposés coaxialement l'un par rapport à l'autre et le dispositif de blocage (27) est agencé de manière à agir entre les dispositifs de fraisage (11, 12).

3. Appareil de fraisage multi-profil selon la revendication 1 ou la revendication 2, dans lequel ledit au moins un second dispositif de fraisage (12) est de plus relié au premier dispositif de fraisage (11) de manière coulissante axialement et résistante à la rotation.

4. Appareil de fraisage multi-profil selon l'une quelconque des revendications précédentes, dans lequel le dispositif de blocage (27) présente en outre au moins deux éléments centrifuges (28, 29), dans lequel au moins un premier élément centrifuge (28) bloque le second dispositif de fraisage (12) dans la position d'utilisation (24) et au moins un second élément centrifuge (29) bloque le second dispositif de fraisage (12) dans la position de non-utilisation (23).

5. Appareil de fraisage multi-profil selon la revendication 4, dans lequel lesdits au moins deux éléments centrifuges (28, 29) sont de plus respectivement logés dans un renfoncement (31) sur le pourtour extérieur (16) du premier dispositif de fraisage (11) et au moins un renfoncement (32) est formé sur un pourtour intérieur (14) du second dispositif de fraisage (12), lequel est positionné dans la position d'utilisation (24) du second dispositif de fraisage (12) par rapport audit au moins un premier élément centrifuge (28) et dans la position de non-utilisation (23) du second dispositif de fraisage (12) par rapport audit au moins un second élément centrifuge (29).

6. Appareil de fraisage multi-profil selon l'une quelconque des revendications 1 à 3, dans lequel ledit au moins un élément centrifuge (28, 29) est de plus logé dans un renfoncement (31) sur le pourtour extérieur (16) du premier dispositif de fraisage (11) et au moins deux renfoncements (32) sont formés espacés axialement l'un de l'autre sur le pourtour intérieur (14) du second dispositif de fraisage (12), dans lequel, dans la position d'utilisation (24) du second dispositif de fraisage (12), un premier renfoncement (32) est positionné par rapport à l'élément centrifuge (28, 29) et un second renfoncement (32) est positionné par rapport à l'élément centrifuge (28, 29) dans la position de non-utilisation (23).

7. Appareil de fraisage multi-profil selon la revendication 5 ou la revendication 6, dans lequel par le mouvement de rotation des dispositifs de fraisage (11, 12), au moins un élément centrifuge (28, 29) est de plus amené dans une position de blocage (33), dans laquelle ledit au moins un élément centrifuge (28, 29) est disposé partiellement dans le renfoncement (31) sur le pourtour extérieur (16) du premier dispositif de fraisage (11) et partiellement dans ledit au moins un renfoncement (32) correspondant sur le pourtour intérieur (14) du second dispositif de fraisage (12).

8. Appareil de fraisage multi-profil selon l'une quelconque des revendications précédentes, dans lequel ledit au moins un élément centrifuge (28, 29) est de plus formé en tant que sphère ou en tant que corps cylindrique, dont la face frontale orientée radialement vers l'extérieur est arrondie ou conique.

9. Appareil de fraisage multi-profil selon l'une quelconque des revendications 5 à 8, dans lequel ledit au moins un renfoncement (32) sur le pourtour intérieur (14) du second dispositif de fraisage (12) présente, de plus, en coupe longitudinale du second dispositif de fraisage (12), une des surfaces obliques (32a) disposées du côté de la position d'utilisation (24), de préférence en forme de V.

10. Appareil de fraisage multi-profil selon la revendication 9, dans lequel ledit au moins un premier élément centrifuge (28) dans la position de blocage (33) agit de plus sur la surface oblique (32a) dudit au moins un renfoncement (32) de manière à former une composante de force axiale (Fₐ) qui appuie le second dispositif de fraisage (12) dans la position d'utilisation (24) contre au moins une butée (15a) définissant la position d'utilisation (24),
dans lequel de préférence, ladite au moins une butée (15a, 15b) définissant la position d'utilisation (24) et/ou la position de non-utilisation (23) présente de plus au moins une surface de butée en forme de point ou de came.

11. Appareil de fraisage multi-profil selon la revendication 10, dans lequel au moins ladite au moins une butée (15a) définissant la position d'utilisation (24) est de plus prévue de manière coulissante axialement par un dispositif d'ajustage.

12. Appareil de fraisage multi-profil selon l'une quelconque des revendications 5 à 11, dans lequel une profondeur du renfoncement (32) est de plus formée de manière que ledit au moins un élément centrifuge (28, 29) de forme sphérique ou cylindrique soit disposé dans la position de blocage (33) au moins à moitié dans le renfoncement (31).

13. Dispositif d'usinage (20) pour l'usinage par enlèvement de copeaux de pièces à usiner qui sont formées de préférence en bois, matériaux dérivés du bois, matière plastique, matériau composite et/ou similaire, notamment pour l'usinage de bords des pièces à usiner, présentant un support de pièce à usiner, pour recevoir au moins une pièce à usiner, un appareil de fraisage multi-profil (10), pour exécuter le processus d'usinage par enlèvement de copeaux sur la pièce à usiner, un dispositif d'entraînement, pour entraîner l'appareil de fraisage multi-profil (10) ainsi qu'un dispositif de transport, pour provoquer un mouvement relatif entre la pièce à usiner et l'appareil de fraisage multi-profil (10),
**caractérisé en ce que**
l'appareil de fraisage multi-profil (10) est conçu selon l'une quelconque des revendications 1 à 12.

14. Dispositif d'usinage selon la revendication 13, dans lequel un dispositif de réglage (35) est de plus prévu, lequel commande un mouvement de réglage dudit au moins un second dispositif de fraisage (12) entre la position d'utilisation (24) et la position de non-utilisation (23).

15. Dispositif d'usinage selon la revendication 13 ou la revendication 14, dans lequel un dispositif capteur (34) est de plus prévu, lequel détecte une position de réglage dudit au moins un second dispositif de fraisage (12).
